# EUROPEAN PATENT SPECIFICATION

(11) **EP 2 288 494 B1**
(45) Date of publication and mention of the grant of the patent: **22.02.2012**
(21) Application number: 09767896.5
(22) Date of filing: 22.06.2009
(51) Int. Cl.: B32B 5/18, B65D 5/54, B65D 75/58, B41M 1/30, B65D 65/38

(54) **PRINTED FOAMED FILM PACKAGE**
VERPACKUNG AUS BEDRUCKTER AUFGESCHÄUMTER FOLIE
EMBALLAGE EN FILM CELLULAIRE IMPRIMÉ

(30) Priority: 20.06.2008 US 74344 P; 24.06.2008 US 75170 P
(43) Date of publication of application: 02.03.2011
(73) Proprietor: The Procter & Gamble Company, Cincinnati, OH 45202 (US)
(72) Inventor: ROGERS, Neil, John, B-1800 Vilvoorde (BE); REMUS, Michael, D-69121 Heidelberg (DE)
(74) Representative: Kremer, Véronique Marie Joséphine
(86) International application number: PCT/US2009/048113
(87) International publication number: WO 2009/155588

(56) References cited:
- DE-A1- 4 447 632
- DE-A1- 10 237 818
- US-A1- 2002 083 855
- US-A1- 2007 190 452

## Description

### FIELD OF THE INVENTION

This invention relates to the field of packages comprising a foamed film layer.

### BACKGROUND OF THE INVENTION

Polyolefin plastic film is used to construct a wide variety of packages such as bags and pouches that hold consumer goods. For example, bags holding stacks of disposable diapers or hygiene articles, pouches for wet wipes, and bags containing granular laundry detergent are often made from plastic film. The plastic film that forms a package may be a single layer of film (called a monofilm), a combination of layers that are co-extruded, or a laminate of separately produced layers that are adhered to one another. In virtually all packages, some sort of indicia is printed on the plastic film.

Two types of printing that are often utilized to imprint plastic film are flexographic printing and rotogravure printing. Flexographic printing employs a flexible printing plate made of a flexible, elastomeric material. A raised relief image of the indicia to be printed on the package is present on the flexible printer plate. The relief image is coated with ink and then pressed onto the plastic film. Often, one or more flexographic printer plates are positioned on a rotating print cylinder that prints on a sheet of film as the film moves beneath the print wheel. Each plate may carry a different type or color ink. Rotogravure printing uses a printer plate that has an engraved relief image. The printer plate is usually made of metal and is often formed into a cylindrical print roll. Ink is drawn into the engraved image and transferred to the plastic film. Because both flexographic and rotogravure printing involve contacting the surface of the plastic film with a relief image to transfer the ink to the film, variations in surface texture of the plastic film will impact print quality. Rotogravure presses may have multiple print rolls whereas each print roll can carry a different type or color ink.

DE 102 37 818 A1 discloses an insulation material for use on packaging units, containers, bottles and/or areal elements comprises a reflective layer located between a foamed layer and a carrier layer.

DE 44 47 632 A1 discloses a process for decorating plates or flexible webs or substrates which can not be printed directly, or if they can, only with great difficulty, or for protecting the decoration of plates or webs, comprises fusing a paper-like opaque, foamed, (un)printed plastic film onto the substrate by a combination of heat and pressure (the latter being applied from underneath in the case of a printed film).

US 2007/0190452 A1 discloses a laser imageable flexographic printing plate precursor comprises a thermoset elastomeric upper layer that is at least partially ablatable and comprises a radiation sensitive compound, and a non-ablatable elastomeric underlayer.

US 2002/0083855 A1 discloses a method, associated software and resulting printing plate having both solid and halftone areas comprising ink cells.

Much of the cost associated with plastic film packages is the cost of the plastic resin that is used to make the film. Recent technological developments have made it feasible to produce foamed polyolefin film of suitable thickness (10-250 µm (microns)) and strength for the types of packages described above. Several exemplary foamed polyolefin films that are suitable for packages are described in European Patent No. 1 646 677. The use of foamed thin film allows for replacement of part of the resin (e.g., 5-50% by weight) with gaseous bubbles that are formed or incorporated in the film during a foaming process. Because the voids or cells left by the bubbles occupy volume that was formerly filled with resin, foamed film allows for a reduction in resin without a corresponding reduction in film thickness, commonly referred to as the film's caliper.

One notable feature of foamed thin films is that they have a rough surface texture as compared to a non-foamed film of the same caliper. The rough texture, caused by the presence of the voids in the film, makes it difficult to print directly on the foamed thin film using flexographic or rotogravure printing. The rough texture tends to cause voids in ink coverage due to the recesses in the surface not contacting the print plate. In addition to detracting from the appearance of a package and its graphics and text, these voids in ink coverage may degrade an image of a bar code to a such a degree that a bar code reader could not decode the bar code.

### SUMMARY OF THE INVENTION

A method of constructing a package having printed indicia of acceptable quality includes providing at least one layer of foamed thin film wherein the layer of foamed thin film has a caliper of between 10 and 250 µm (microns) and comprises between 5% to 50% density reduction as compared to a non-foamed thin film of substantially the same caliper and composition. A first surface of the at least one layer of foamed thin film is the printed surface of the package. The indicia is printed on the printed surface by applying ink to a printer surface and contacting the printed surface with the inked printer surface to coat the printed surface with ink. The printer surface includes a plurality of raised dots having top surfaces configured to contact the printed surface to imprint the indicia on the printed surface. The raised dots have a dot percentage no greater than 70%, and in some embodiments the dot percentage is between 50%-60%.

In some embodiments, the ink may be selected to have a 20 second increased viscosity as compared to ink that would be selected to print substantially the same indicia on a print surface of a non-foamed thin film of substantially the same caliper and composition. The ink may be selected as having an intensity that is 30% - 50% greater than an intensity of an ink that would be selected to print substantially the same indicia on a print surface of a non-foamed thin film of substantially the same caliper and composition. The printed surface may be contacted with the inked printer surface with a pressure that is greater than a printer pressure that would be used to print substantially the same indicia on a print surface of a non-foamed thin film of substantially the same caliper and composition.

A package includes at least one layer of foamed thin film wherein the layer of foamed thin film has a caliper of between 10 and 250 µm (microns) and comprises between 5% to 50% density reduction as compared to a non-foamed thin film of substantially the same caliper and composition. The package also includes printed indicia of acceptable quality is printed on a printed surface of the package. A first surface of the at least one layer of foamed thin film is the printed surface of the package. In some embodiments, the package is made of a foamed thin film co-extrusion that has a top layer that includes a foamed thin film that includes the printed surface. In other embodiments, the package includes a foamed thin film lamination that has a top layer that includes a foamed thin film that includes the printed surface.

### BRIEF DESCRIPTION OF THE DRAWINGS

Figure 1 is a top plan view of a foamed thin film with printed indicia in accordance with one or embodiments of the present invention.
Figure 2 is a cross section view of a printer plate acting on the foamed thin film of Figure 1 in accordance with one or embodiments of the present invention.
Figure 3 is a top plan view of the printer plate of Figure 2.
Figure 4 is a cross section view of a prior art printer plate acting on a non-foamed film with printed indicia.

### DETAILED DESCRIPTION OF THE INVENTION

### Foamed Films

As used herein, the term "thin film" designates a film having a caliper that is suitable for use in packages such as bags and pouches for consumer goods, such as, for example, film calipers of between 10 and 250 µm (microns).

As used herein, the term "foamed thin film" designates a film containing at least one layer with a caliper of between 10 and 250 µm (microns) that contains gaseous bubbles or void volumes or cells wherein that layer exhibits a density reduction of at least 5% yield (as determined by ASTM D4321) versus a film of the same thickness that does not comprise gaseous bubbles or void volumes or cells.

As used herein, the term "printed indicia of acceptable quality" means indicia such as, for example, characters, graphics, and regions of color that meet industry standards for clarity and density of print on consumer packaging. One informal way of determining whether the indicia are of acceptable quality is whether voids in the ink in the region through which the underlying foamed

film can be seen with the naked eye. Two industry known tests used to measure whether bar code indicia are of acceptable quality are ISO/IEC 15415 Bar Code Print Quality Test Specification and ISO/IEC 15416 that grades readability of bar codes from "4A" (best) to "0F" (worst). A bar code readability of 2C as measure by ISO/IEC 15416 is generally considered as acceptable quality in the industry. Another exemplary way of determining whether graphics and regions of color are of acceptable quality is to measure the density of the printed area with a densitometer. In many instances, specific test patterns can be printed and measured using ASTM F 2036. A density of 1.1 to 1.8 Density Units for a solid black region printed on white paper is generally considered to be of acceptable quality in the industry.

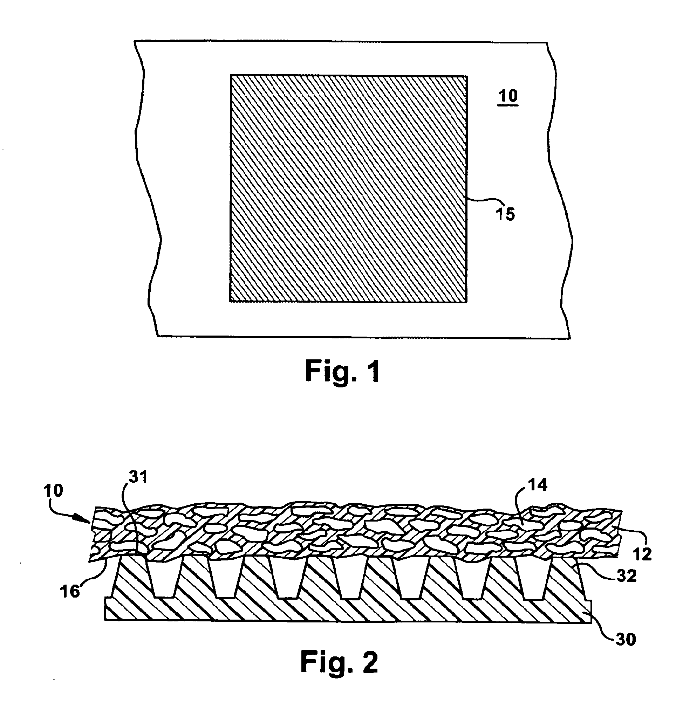

Figure 1 is a top plan view of a foamed thin film 10 that has indicia 15. Foamed thin films 10 can be used to make packages. Foamed thin films 10 typically have a caliper (thickness) of between 10 and 250 µm (microns) and are made of a foamed polyolefin resin. Many different blends of components may be used in the polyolefin and components which are selected for a variety of properties such as strength and opacity. Polyethylene (e.g. Low Density Polyethylene LDPE, Linear Low Density Polyethylene LLDPE, High Density Polyethylene HDPE, Medium Density Poly ethylene MDPE, Metallocene Polethylene mPE, Ethyl Vinyl Acetate EVA and mixtures thereof) and polypropylene, and blends thereof are exemplary types of materials that are often used in the manufacture of foamed thin films 10. The thin film 10 shown in Figure 1 is called a monofilm because it consists of a single layer.

As can be seen best in Figure 2, the foamed thin monofilm 10 is made up of a resin 12, such as, for example, polyolefin, in having voids left by gas bubbles 14. One way to produce foamed monofilm 10 is adding one or more chemical blowing agents such as, for example, Sodium Hydro Carbonate Powder and an acidifier to the master batch of resin 12 prior to heating. Upon heating, chemical blowing agents release carbon dioxide. The carbon dioxide expands and forms bubbles 14 in the monofilm 10 during subsequent processing steps. One exemplary chemical equation describing the transition of the blowing agent to carbon dioxide is: NaHCO₃ (Sodium Hydro Carbonate Powder) + H⁺ (Acidifier) → Na⁺ + CO₂ + H₂O

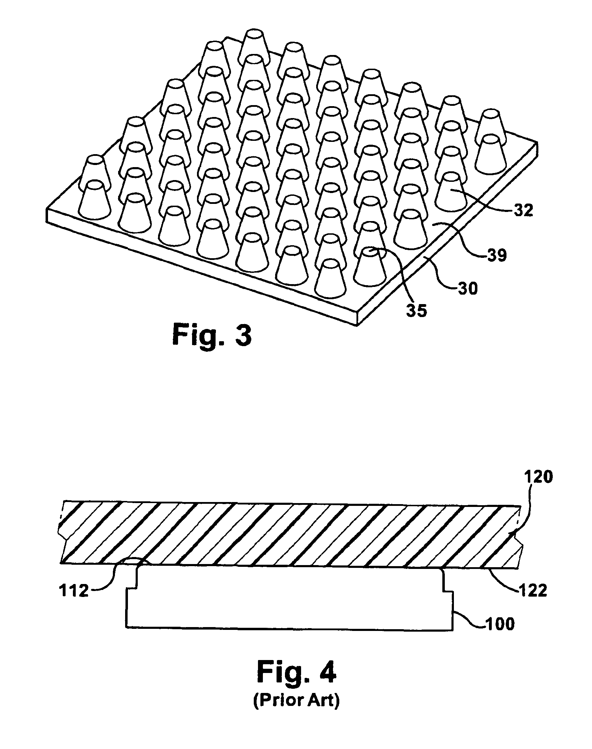

Some of the carbon dioxide bubbles 14 escape the molten resin 12 while others are trapped in the resin 12 during cooling to form voids that remain after solidification of the resin. An alternative to the use of chemical blowing agents that react in the resin to produce bubbles 14 is to inject a gas such as, for example, carbon dioxide into the plastic extruder during film manufacture. The bubbles 14 shown in Figure 2 are generally cigar shaped, however, other shapes are contemplated. The bubbles 14 are generally cigar shaped and oriented in the direction of film extrusion. In a foamed thin polyethylene monofilm having a caliper of 40 µm (microns), a typical cigar shaped bubble may be 10 µm (microns) in diameter and between 50 and 300 µm (microns) in length. The foam structure of a foamed thin monofilm 10 is generally closed towards the surface such that substantially all of the bubbles 14 close to the surface are closed. Because the bubbles 14 create voids that occupy volume that would have been occupied by resin 12 in a non-foamed thin film, the foamed thin monofilm 10 uses less resin 12 than its non-foamed counterpart (see e.g., non-foamed thin film 120 in Figure 4) while maintaining substantially the same caliper. While the bubbles are typically closed, open bubbles that can provide surface irregularities, (e.g. troughs or dimples) may be present.

The monofilm 10 may also be a top, or printed, layer of foamed thin film co-extrusion (not shown) or a foamed thin film laminate (not shown). Many film packages use thin film co-extrusions or laminates because the composition of each layer may be selected to contribute a desired quality to the resulting package. To produce a foamed thin film co-extrusion, resins for each layer are co-extruded while molten and cooled together to form a layered thin film co-extrusion. Thus, the foamed thin film co-extrusion includes layers of each type of resin directly adjacent one another. Foamed thin film co-extrusions may include layers that are selected to provide, for example, strength, opacity, print quality, and moisture resistance.

Foamed thin film laminates are similar to thin film co-extrusions because both include layers of different types that are selected to contribute a desired quality to the resulting package. However, rather than being combined in a molten form, the layers of a thin film laminate are separately formed and cooled. Laminates are often used when one or more of the layers is not well suitable for co-extrusion, such as, for example, metallized layers that require significantly different processing techniques as compared to plastic layers. The separate layers are then fixed to one another, such as, for example, using adhesive. According to the present invention, foamed thin film co-extrusions and laminates have a top layer that is foamed. Package indicia is printed on this top layer. Further contemplated are coat-extruded laminates where at least one layer is a foamed layer which can be either the previously formed substrate that is later coat-extruded with a different layer, or the foamed layer can be the coat-extruded layer. In the case of the foamed layer being a previously foamed substrate that is later coat-extruded with a different layer, the foamed layer can be printed before, during, or after the coat-extrusion process. In the case of the foamed layer being the coat extruded layer, it is printed after the coat extrusion process at any time when the layer is sufficiently cooled for printing.

Regardless of whether the printed foamed layer is a monofilm, or a layer in a multi-layer structure, a foamed film layer can be printed at any convenient time. It can be printed on one or both sides, and the sides may be printed concurrently or in sequence. The foamed thin film or foamed film layer can receive printing by one or both of flexographic and rotogravure printing processes.

### Printing on Foamed Thin Films

Flexographic printing is a method of direct rotary printing that uses a resilient relief image in a plate of rubber or photopolymer to print indicia on plastic film used to make packages. In many instances, the plate or plates are installed on a rotatable print cylinder that prints on a continuous sheet of plastic film as it passes beneath the print cylinder. Figure 4 is a cross section view of a prior art non-foamed thin film 120 being imprinted with indicia (such as indicia 15 shown in Figure 1). A printer surface 112 of a printer plate 100, such as, for example, a flexographic plate contacts a printed surface 122 of the non-foamed thin film 120. As can be seen from Figure 6, the printer surface 112 is substantially planar to provide a full coverage of ink on the printed surface.

It has been discovered that using a flat flexographic printer surface such as the printer surface 112 to print on foamed thin films (e.g. foamed thin film 10) produces less than printed indicia of acceptable quality. Voids in the ink are visible to the naked eye, making the print quality unacceptable for many packaging applications. Various adjustments to the flexographic print process used with non-foamed thin films have been made in an attempt to achieve an acceptable level of ink coverage on foamed thin films. For example, the pressure with which the printer surface 112 contacts the printed surface on the foamed thin film has been increased and the viscosity of the ink has been decreased in an effort to better fill the sunken contours of the rough surface of the foamed thin film 10. Neither of these two approaches was able to produce printed indicia of acceptable quality on the foamed thin film.

In light of the difficulties with achieving acceptable print quality on foamed thin films, one way to produce printed packages with foamed thin film would be to cover the foamed thin film with a printable non-foamed layer, such as, for example, a co-extruded or laminated layer. However, inclusion of a specialized print layer on the foamed thin film would cancel out much of the cost savings realized by the use of foamed thin film. Therefore, it is desirable to develop a method for printing directly on a foamed thin film whether the foamed thin film later comprises a monofilm or is used as a layer in a multi-layer structure.

Figure 2 illustrates a dotted, or half tone, flexographic printer plate 30 being used to imprint indicia 15 (Figure 1) on the foamed thin film 10. The dotted printer plate 30 includes a printer surface 31 having a plurality of raised dots 32. The raised dots 32 have top surfaces (35 in Figure 3) that contact a printed surface 16 of the foamed thin film 10 to produce printed indicia of acceptable quality (e.g., indicia 15) on the foamed thin film. Dotted or half tone printer plates 30 are currently used on many substrates to produce shading in an image. This shading is accomplished by printing dots that have space between them such that the dots, in aggregate, cover less than the full area of the area being printed. The ratio between the print area covered by the top surfaces of the dots and the total surface area being printed is known in the industry as the dot percentage.

Figure 3 is a top plan view of the dotted flexographic printer plate 30. A relief image 39 of indicia 15 (Figure 1) is defined by the raised dots 32. When the top surfaces 35 of the raised dots 32 contact the printed surface 16 (Figure 2) the indicia 15 is imprinted on the printed surface 16 without visible voids in coverage. It has been discovered that using a dotted printer plate 30 plate with a dot percentage of no more than 70% will produce printed indicia of acceptable quality (e.g. indicia 15) on foamed thin film 10.

Surprisingly, print quality appears to drop off at dot percentages greater than 70% as voids in the ink become visible. One reason that dotted print plates may work better than solid print plates on foamed thin film 10 may be that the flexible raised dots 32 are able to move and conform with the rough surface, such as into the recessed areas of the rough printed surface 16 of the foamed thin film 10. Also surprisingly, increased viscosity ink, such as, for example, a 20 second increase in viscosity over the viscosity of ink used on non-foamed thin films also enhances the quality of ink coverage when used in addition to the dotted print plate 30. In some circumstances, it may be advantageous to also increase the pressure with which the printer surface 31 contacts the printed surface 16. Another measure that has been observed to improve print quality on foamed thin films is use of a softer durometer material on the print plate 30.

For example, in one test, a dotted printer plate 30 having a dot percentage between 50% - 60 % was used to produce printed indicia of acceptable quality on a 40 µm foamed thin film with approximately 20% resin reduction. The pressure on the print cylinder was increased by 20 µm and the pressure on the anilox roller was increased by 10 µm as compared to the pressures that would be used with non-foamed thin film of the same caliper. An ink having a 20 second increase in ink viscosity as compared to inks used with non-foamed thin films was used. This configuration produced a satisfactory level of ink coverage on foamed thin films. In order to compensate for the use of the dotted printer plate, it may be advantageous to increase the intensity of the ink by 30 - 50%. Intensity of an ink is an indication of the strength of color of the ink. The following chart summarizes printing parameters for direct flexographic printing on foamed films as compared to printing parameters for printing on non-foamed films.

| Parameter | Method | Unit | Standard flexo print settings | Typical adapted settings for foamed films |
|---|---|---|---|---|
| Dot saturation range on flexo print plate | - | % | 0-100 | 0-70 |
| Pressure (central cylinder) | Distance adjustment to print plate cylinder | µm | reference | +5 to +10 (increased pressure) versus reference |
| Pressure (Anilox roll) | Distance adjustment to print plate cylinder | µm | reference | +10 to +20 (increased pressure) versus reference |
| Ink viscosity | DIN 53211 or ISO EN 2431 (with 4mm hole diameter) | sec | 18-25 | +5 to +10 versus standard |

It is believed that using dotted or half tone rotogravure print plates having a dot percentage of no more than 70% will also be effective to print regions of full coverage of ink 15 on foamed thin film 10. It is also expected that increasing the viscosity and intensity of the ink will have a beneficial effect on the print quality of the indicia on foamed thin films.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore the invention, in its broader aspects, is not limited to the specific details, the representative system, and illustrative examples shown and described. Accordingly, departures may be made from such details without departing from the scope of the claims.

## Claims

1. A method of constructing a package having printed indicia of acceptable quality present on a printed surface, the method comprising:
providing at least one layer of foamed thin film wherein the layer of foamed thin film has a caliper of between 10 and 250 µm (microns) and comprises between 5% to 50% density reduction as compared to a non-foamed thin film of substantially the same caliper and composition, wherein a first surface of the at least one layer of foamed thin film is the printed surface of the package; and
printing the indicia on the printed surface by applying ink to a printer surface and contacting the printed surface with the inked printer surface to coat the printed surface with ink;
wherein the printer surface comprises a plurality of raised dots, the raised dots having top surfaces configured to contact the printed surface to imprint the indicia on the printed surface, **characterized in that** the raised dots have a dol percentage of no greater than 70%.

2. The method according to claim 1 wherein the raised dots have a dot percentage of between 50% - 60%.

3. The method according to claim 1 wherein the raised dots have a dot percentage of 70%.

4. The method according to any of the preceding claims wherein the ink is selected to have approximately a 20 second increased viscosity as compared to ink that would be selected to print substantially the same indicia on a print surface of a non-foamed thin film of substantially the same caliper and composition.

5. The method according to any of the preceding claims wherein the ink is selected as having an intensity that is 30% - 50% greater than an intensity of an ink that would be selected to print substantially the same indicia on a print surface of a non-foamed thin film of substantially the same caliper and composition.

6. The method according to any of the preceding claims wherein the printed surface is contacted with the inked printer surface with a pressure that is greater than a printer pressure that would be used to print substantially the same indicia on a print surface of a non-foamed thin film of substantially the same caliper and composition.

## Patentansprüche

1. Verfahren zum Herstellen einer Verpackung mit gedruckten Zeichen annehmbarer Qualität auf einer bedruckten Oberfläche, wobei das Verfahren Folgendes umfasst:
Bereitstellen von mindestens einer Schicht geschäumter dünner Folie, wobei die geschäumte dünne Folie eine Stärke von 10 bis 250 µm (Mikrometern) und eine Dichtereduzierung von 5 % bis 50 % im Vergleich zu nicht geschäumter dünner Folie einer im Wesentlichen gleichen Stärke und Zusammensetzung aufweist, wobei eine erste Oberfläche der mindestens einen Schicht aus geschäumter dünner Folie aus der bedruckten Oberfläche der Verpackung besteht, und
Drucken der Zeichen auf die bedruckte Oberfläche durch Auftragen von Tinte auf eine Oberfläche eines Druckers und Berühren der bedruckten Oberfläche mit der eingefärbten Oberfläche des Druckers zwecks Beschichten der bedruckten Oberfläche mit Tinte,
wobei die Oberfläche des Druckers mehrere erhabene Punkte umfasst, wobei die erhabenen Punkte Oberflächen aufweisen, die so konfiguriert sind, dass sie die bedruckte Oberfläche berühren, um die Zeichen auf die bedruckte Oberfläche zu drucken, **dadurch gekennzeichnet, dass** die erhabenen Punkte eine prozentuale Punktverteilung von höchstens 70 % aufweisen.

2. Verfahren nach Anspruch 1, wobei die erhabenen Punkte eine prozentuale Punktverteilung von 50 % - 60 % aufweisen.

3. Verfahren nach Anspruch 1, wobei die erhabenen Punkte eine prozentuale Punktverteilung von 70 % aufweisen.

4. Verfahren nach einem der vorstehenden Ansprüche, wobei die Tinte so ausgewählt wird, dass sie eine etwa um 20 Sekunden höhere Viskosität aufweist als Tinte, die zum Drucken von im Wesentlichen gleichen Zeichen auf eine Druckoberfläche aus einer nicht geschäumten dünnen Folie der im Wesentlichen gleichen Stärke und Zusammensetzung gewählt würde.

5. Verfahren nach einem der vorstehenden Ansprüche, wobei die Tinte so ausgewählt wird, dass sie eine Leuchtkraft aufweist, die um 30 % - 50 % größer ist als die Leuchtkraft einer Tinte, die zum Drucken von im Wesentlichen gleichen Zeichen auf eine Druckoberfläche aus einer nicht geschäumten dünnen Folie der im Wesentlichen gleichen Stärke und Zusammensetzung gewählt würde.

6. Verfahren nach einem der vorstehenden Ansprüche, wobei die bedruckte Oberfläche durch die eingefärbte Oberfläche des Druckers mit einem Druck berührt wird, der größer ist als der Druck bei einem Drucker, der zum Drucken von im Wesentlichen gleichen Zeichen auf eine Druckoberfläche aus einer nicht geschäumten dünnen Folie einer im Wesentlichen gleichen Stärke und Zusammensetzung gewählt würde.

## Revendications

1. Procédé de construction d'un conditionnement ayant une estampille imprimée de qualité acceptable présente sur une surface imprimée, le procédé comprenant :
la fourniture d'au moins une couche de film mince de mousse dans lequel la couche de film mince de mousse a une épaisseur comprise entre 10 et 250 µm (microns) et comprend entre 5 % et 50 % de réduction de masse volumique par comparaison avec un film mince qui n'est pas une mousse essentiellement de la même épaisseur et de la même composition, dans lequel une première surface de l'au moins une couche de film mince de mousse est la surface imprimée du conditionnement ; et
l'impression de l'estampille sur la surface imprimée en appliquant de l'encre sur une surface d'imprimante et en mettant en contact la surface imprimée avec la surface d'imprimante encrée pour revêtir la surface imprimée avec de l'encre ;
dans lequel la surface d'imprimante comprend une pluralité de points relevés, les points relevés ayant des surfaces supérieures configurées pour venir en contact avec la surface imprimée de façon imprimer l'estampille sur la surface imprimée, **caractérisé en ce que** les points relevés ont un pourcentage de points qui n'est pas supérieur à 70%.

2. Procédé selon la revendication 1, dans lequel les points relevés ont un pourcentage de points compris entre 50 % et 60 %.

3. Procédé selon la revendication 1, dans lequel les points relevés ont un pourcentage de points de 70 %.

4. Procédé selon l'une quelconque des revendications précédentes, dans lequel l'encre est choisie pour avoir approximativement une viscosité augmentée de 20 secondes par comparaison avec une encre qui serait choisie pour imprimer essentiellement la même estampille sur une surface d'impression d'un film mince qui n'est pas une mousse essentiellement de la même épaisseur et de la même composition.

5. Procédé selon l'une quelconque des revendications précédentes, dans lequel l'encre est choisie comme ayant une intensité qui est 30 % à 50 % supérieure à l'intensité d'une encre qui serait choisie pour imprimer essentiellement la même estampille sur une surface d'impression d'un film mince qui n'est pas une mousse essentiellement de la même épaisseur et de la même composition.

6. Procédé selon l'une quelconque des revendications précédentes, dans lequel la surface imprimée est mise en contact avec la surface d'imprimante encrée avec une pression qui est supérieure à une pression d'imprimante qui serait utilisée pour imprimer essentiellement la même estampille sur une surface d'impression d'un film mince qui n'est pas une mousse essentiellement de la même épaisseur et de la même composition.
